# NEUE EUROPÄISCHE PATENTSCHRIFT

(11) **EP 0 622 430 B2**
(45) Veröffentlichungstag und Bekanntmachung des Hinweises auf die Entscheidung über den Einspruch: **24.04.2002**
(45) Hinweis auf die Patenterteilung: 30.07.1997
(21) Anmeldenummer: 94105444.7
(22) Anmeldetag: 08.04.1994
(51) Int. Cl.: C09D 123/08, C09J 7/00, C08J 5/18, C09J 123/08, B32B 27/06

(54) **Verwendung eines Copolymerisats aus Ethylen und Vinylacetat als Laminierfolie**
Use of an ethylene vinyl acetate copolymerisate as laminate sheet
Utilisation d'un copolymérisat éthylène-acétate de vinyl comme feuille laminée

(30) Priorität: 24.04.1993 DE 4313542
(43) Veröffentlichungstag der Anmeldung: 02.11.1994
(73) Patentinhaber: Basell Polyolefine GmbH, 77694 Kehl (DE)
(72) Erfinder: Joest, Bernd, D-69115 Heidelberg (DE); Keller, Rudolf, D-69141 Neckargemuend (DE)

(56) Entgegenhaltungen:
- EP-A- 0 424 761
- EP-A- 0 592 913
- EP-B- 0 263 882
- DE-A- 1 925 414

## Beschreibung

Die vorliegende Erfindung betrifft die Verwendung eines Copolymerisats aus Ethylen und 13 bis 45 Gew.-%, bezogen auf das Copolymerisat, Vinylacetat als haftende Laminierfolie zum Beschichten von nichtmetallischen Trägermaterialien, wobei die haftende Schicht keine weiteren Copolymere aus der Gruppe Ethylenethylacrylat-Copolymer und Ethylen-Acrylsäure-Copolymere enthält.

Zur Ausrüstung von flächigen Trägermaterialien, beispielsweise Kartonagen, werden heute thermoplastische Schutzfolien verwendet, die üblicherweise mit einer Kleberschicht kaschiert sind. Derartige Schutzfolien bestehen vorwiegend aus weichem Polyvinylchlorid (PVC), welches nach seiner Herstellung noch mit einem Kleber beschichtet, d.h. kaschiert wird. dies erfolgt entweder durch Klebekaschierung oder durch Extrusionskaschierung.

Im Zuge der mit PVC verbundenen Entsorgungs- und Umweltproblematik sind Bestrebungen im Gange, PVC durch weniger umweltbelastende Materialien zu ersetzen. Darüber hinaus besteht ein großes Interesse seitens der Folienhersteller, den verfahrenstechnischen Aufwand zum Kaschieren der Folie zu verringern. Im Falle des Kleberkaschierverfahrens können beispielsweise bei der Verarbeitung Lösungsmitteldämpfe entstehen, die abgesaugt und beseitigt werden müssen, um die Gefahr gesundheitlicher Schäden zu minimieren. Beim Extrusionskaschierprozeß wiederum sind sehr hohe Anlageninvestitionskosten notwendig.

EP-B-263882 beschreibt zusammengesetzte Folien bestehend aus einem Trägerfilm aus z.B. kristallinem Polypropylen und einer hitzeempfindlichen Laminierfolie aus z.B. einem Ethylen/Vinylacetat-Copolymeren mit 12 Gew.-% an Vinylacetat (vgl. Beispiel 1). Die Folien werden zur Beschichtung von nichtmetallischen Trägermaterialien, z.B. von bedrucktem Papier, verwendet.

EP-A-4245761 beschreibt eine Mehrschichtfolie enthaltend eine Basisfolie aus einer Schicht Polypropylen und einer Schicht aus einer Mischung aus Polypropylen und einem Antiblockadditiv, und eine heißkaschierbare Folie aus einer Mischung aus einem Ethylen/Vinylacetat-Copolymeren mit 21 Gew.-% Vinylacetat und einem Ethylen/Acrylsäure-Copolymeren. Letztere Schicht dient bei der Beschichtung als haftende Schicht (vgl. Seite 3, Zeilen 54/55). Die Folien werden vorzugsweise zur Beschichtung von nichtmetallischen Trägermaterialien, z.B. Papier oder Pappe, verwendet.

In der DE-A 42 34 712 wird bereits die Verwendung von Copolymerisaten aus α-Olefinen mit ungesättigten, polaren Comonomeren als Oberflächenschutzfolie beim Transport von Automobilen beschrieben. Derartige, polare Gruppen enthaltende Copolymerisate werden dabei auf metallische Flächen aufgetragen, welche mit polaren Materialien üblicherweise stabile Verbunde eingehen. Aus der DE-A 42 34 712 ist jedoch nicht bekannt, polare Gruppen enthaltende Copolymerisate als Folien für nichtmetallische Materialien zu verwenden, um auf diese Weise das Anwendungsspektrum derartiger Materialien zu erweitern.

Der vorliegenden Erfindung lag daher die Aufgabe zugrunde, den geschilderten Nachteilen abzuhelfen und eine Folie zu entwickeln, welche insbesondere für nichtmetallische Trägermaterialien geeignet ist.

Diese Aufgabe wurde gelöst durch die Verwendung eines Copolymerisats aus Ethylen und 13 bis 45 Gew.-%, bezogen auf das Copolymerisat, Vinylacetat las haftende Laminierfolie zum Beschichten von nichtmetallischen Trägermaterialien, wobei die haftende Schicht keine weiteren Copolymere aus der Gruppe Ethylenethylacrylat-Copolymer und Ethyl-Acrylsäure-Copolymere enthält. Dabei war überraschend, daß sich polare Gruppen enthaltende Copolymerisate des Ethylens als Laminierfolien für nichtmetallische Trägermaterialien gut eignen.

Dabei wird als haftende Laminierfolie ein solches Ethylen-Copolymerisat verwendet, das 13 bis 45 Gew.-% Vinylacetat als Comonomeres einpolymerisiert enthält. Derartige Copolymerisate aus Ethylen und Vinylacetat sind beispielsweise unter dem Handelsnamen Lupolen® von der BASF Aktiengesellschaft erhältlich.

Die Herstellung derartiger Copolymerisate aus Ethylen und ungesättigten, polaren Comonomeren erfolgt mit den in der Technik üblichen Copolymerisationsverfahren, beispielsweise durch Hochdruckcopolymerisation mit Hilfe radikalisch zerfallender Initiatoren, durch Copolymerisation mit Ziegler- bzw. Ziegler-Natta-Katalysatoren oder mit Phillips-Katalysatoren, oder aber durch Copolymerisation mit metallocenhaltigen Katalysatoren. Die Copolymerisation kann dabei in der Gasphase, in Lösung oder in einer Suspension sowohl kontinuierlich als auch diskontinuierlich durchgeführt werden. Derartige Herstellungsverfahren sind dem in der Kunststofftechnik arbeitenden Fachmann bekannt.

Die für die erfindungsgemäße Verwendung geeigneten Copolymerisate können ferner noch übliche Füllstoffe wie beispielsweise Talkum, Kreide, Schwerspat oder Kaolin sowie gebräuchliche Additive wie beispielsweise Antioxidantien oder UV-Stabilisatoren, z.B. Ruß, enthalten.

Aus derartigen Copolymerisaten können die entsprechenden Folien u.a. in Kalandern oder Extrudern nach dem Blas- oder Breitschlitzfolien-Verfahren bei einer Temperatur von 170 bis 240°C, einem Druck von 250 bis 400 bar und einer mittleren Durchlaufzeit von 5 bis 20 min. hergestellt werden. Weitere übliche Verfahren zur Herstellung der haftenden Oberflächenschutzfolie sind u.a. das Beschichtungsverfahren und das Kaschierverfahren.

Beim Beschichtungsverfahren beispielsweise wird zunächst die zu verwendende Beschichtungsmasse auf eine Trägerbahn aufgetragen, anschließend werden die Arbeitsgänge Gelieren, Kühlen, Abziehen und Aufwickeln durchgeführt. Bei der eigentlichen Coextrusionsbeschichtung wird in einer Beschichtungsanlage mit einem Schmelzefilm, der in einem Extruder aufgeschmolzen und über eine Breitschlitzdüse ausgetragen wird und aus einem oder mehreren Polymerschichten bestehen kann, beschichtet. Der dabei entstehende Verbund wird anschließend in einer Kühl-Änpreßwalzen-Einheit abgekühlt und geglättet. Danach erfolgt die Aufwicklung der Verbundbahn in einer entsprechenden Wickelstation.

Beim Kaschierverfahren werden analog dem Beschichtungsverfahren ebenfalls die Arbeitsgänge Auftragen der Beschichtungsmasse auf die Trägerbahn, Glätten und Kühlen, Abziehen und Aufwickeln durchgeführt. Bei der eigentlichen Extrusionskaschierung läßt man eine vorgefertigte Trägerbahn in einen Glättwerkwalzenstuhl, der 4 Walzen aufweist, einlaufen. Dabei wird die Trägerbahn vor dem ersten Walzenspalt mit einem Schmelzefilm, der in einem Extruder aufgeschmolzen wird, beschichtet. Vor dem zweiten Walzenspalt läßt man eine zweite vorgefertigte Bahn zulaufen. Der dabei entstehende Gesamtverbund wird beim Durchlauf durch den zweiten Walzenspalt geglättet, anschließend gekühlt, abgezogen und in einer Wickelstation aufgewickelt.

Nach dem Blas-/Breitschlitz-Extrusionsverfahren werden allgemein zunächst verschiedene Polymere in unterschiedlichen Extrudern unter geeigneten Bedingungen aufgeschmolzen und anschließend in Form der Schmelzeströme unter Ausformen eines Mehrschichten-Schmelzestroms im Extrusionswerkzeug zusammengeführt. Danach erfolgt das Austragen, Abziehen und Abkühlen der Mehrschichtenschmelzebahn und das Aufwickeln des Verbundes. Auf diese Weise erhält man eine Verbundfolie. Das Breitschlitz-Extrusionsverfahren wird dabei bevorzugt angewandt.

Derartige Verfahren werden üblicherweise bei Temperaturen von 170 bis 300°C, Drücken von 250 bis 400 bar und mittleren Durchlaufzeiten von 5 bis 20 min. durchgeführt.

Da die Copolymerisate in der Schmelze und in der Folie eine hohe Klebneigung zu allen Kontaktflächen aufweisen, werden die für die Herstellung der Verbunde eingesetzten Walzen sowie die Abzugswalzen mit einem gegenüber den Copolymerisaten antiadhäsiven Material, z.B. mit Polytetrafluorethylen, beschichtet. Hierdurch lassen sich u.a. für das einwandfreie Wickeln der Verbunde entsprechende Bahnspannungen einhalten.

Die auf diese Weise erhältlichen haftenden Laminierfolien lassen sich erfindungsgemäß zum Beschichten von nichtmetallischen Trägermaterialien verwenden. Das Aufbringen der haftenden Laminierfolie auf die nichtmetallischen Trägermatieralien kann dabei sowohl von Hand durch leichtes Aufpressen der Folie, als auch durch Einsatz von rotierenden Folienwalzen erfolgen, die ähnlich wie die in Autowaschstraßen gebräuchlichen Walzen langsam über das zu beschichtende Trägermaterial bewegt werden. Anschließend kann gegebenenfalls die Folie durch thermische Behandlung kurzzeitig angeschmolzen werden, um dadurch eine vollständige, alle Oberflächenrauhigkeiten abdeckende Schutzschicht zu erhalten.

Vorzugsweise kann auf die haftende Laminierfolie noch mindestens eine weitere Schutzschicht aufgebracht werden.

Die Hauptaufgabe der auf der haftenden Laminierfolie zusätzlich aufgebrachten Schutzschicht besteht im wesentlichen darin, gegenüber starken Umwelteinflüssen möglichst unempfindlich zu sein und darüber hinaus Belastungen wie Schmutz oder chemische und mechanische Einwirkungen vom Trägermaterial fernzuhalten. Als Schutzschichten können insbesondere thermoplastische Polymere wie beispielsweise Polyamide, Polystyrol, Polyester, Polycarbonate oder Polyolefine eingesetzt werden. Bevorzugt werden dabei Schutzschichten aus Polyolefinen verwendet, beispielsweise aus Ethylenhomopolymerisaten, Propylenhomopolymerisaten oder aus statistischen Propylen-Ethylen-Copolymerisaten. Bevorzugt sind auch Ethylen-Copolymerisate mit einpolymerisiertem Vinylacetat. Die Herstellung derartiger Polyolefine kann durch die dem Fachmann geläufigen Polymerisationsarten erfolgen, beispielsweise durch Ziegler-Natta-Polymerisation, durch Polymerisation mit Hilfe von Phillips-Katalysatoren, durch Hochdruckpolymerisation oder durch Polymerisation mit Hilfe von metallocenhaltigen Katalysatoren. Aus diesen Polyolefinen können die entsprechenden Schutzfolien analog den haftenden Laminierfolien u.a. nach dem Blas- oder Breitschlitzfolien-Verfahren hergestellt werden.

Die als Schutzschicht dienende Folie kann nach ihrer Herstellung durch möglichst flächengleiches Auftragen auf die haftende Laminierfolie aufgebracht werden. Derartige Herstellungsverfahren für mehrschichtige Folien erfolgen üblicherweise nach dem Beschichtungsverfahren, dem Kaschierverfahren oder dem Blas-/Breitschlitz-Coextrusionsverfahren. Die Schutzschicht kann weiterhin übliche Additive, beispielsweise UV-Stabilisatoren, z.B. Ruß oder Antioxidantien, enthalten. Es können auch Füllstoffe wie Talkum, Kaolin oder Schwerspat mitverwendet werden.

Die erfindungsgemäß zu verwendende Laminierfolie kann zum Beschichten üblicher nichtmetallischer Trägermaterialien verwendet werden, beispielsweise von Kartonagen, Holz, Glas, Ton, Kunststoffe, Keramika, Dekor-folien. Bevorzugt wird die Laminierfolie zum Beschich-ten von Kartonagen eingesetzt.

Die erfindungsgemäße Verwendung des Copolymerisats aus Ethylen und Vinylacetat als haftende Laminierfolie ermöglicht es, eine Schutzfolie ohne Einsatz eines Klebers auf nichtmetallische Trägermaterialien aufzubringen. Dadurch kann auf aufwendige Kaschierverfahren verzichtet werden. Die haftende Laminierfolie kann ohne Schwierigkeiten auf die Oberflächen der Trägermaterialien bei relativ niedrigen Temperaturen aufgebracht werden und weist gute Haftfestigkeitswerte zu vielen nichtmetallischen Trägermaterialien auf.

### Beispiele 1 bis 4

Es wurden insgesamt 4 verschiedene Verbunde aus jeweils einer haftenden Laminierfolie und jeweils einer darauf angebrachten Schutzfolie hergestellt. Die Folien wiesen jeweils eine Schichtdicke von 50 µm auf. Dabei wurden folgende Materialien verwendet:
- Lupolen® V 5510 SX: Copolymerisat aus Ethylen mit 33 Gew.-% Vinylacetat; Handelsprodukt der BASF Aktiengesellschaft
- Lupolen® V 1800 S: Ethylenhomopolymerisat; Handelsprodukt der BASF Aktiengesellschaft
- Novolen® 3200 M: Propylencopolymerisat mit einpolymerisiertem Ethylen; Handelsprodukt der BASF Aktiengesellschaft
- Novolen® 1300 M: Propylenhomopolymerisat; Handelsprodukt der BASF Aktiengesellschaft

### I. Mustermaterial

2-Schicht-Folienmuster (Schichtdicke s = 100 µm):

| | | |
|---|---|---|
| 1. | Laminierfolie | Lupolen® V 5510 SX, s = 50 µm |
| | Schutzfolie | Lupolen® V 5510 SX, s = 50 µm + 60 % Kreidezusatz |
| | | |
| 2. | Laminierfolie | Lupolen® V 5510 SX, s = 50 µm |
| | Schutzfolie | Lupolen® 1800 S , s = 50 µm + 30 % Kreidezusatz |
| | | |
| 3. | Laminierfolie | Lupolen® V 5510 SX, s = 50 µm |
| | Schutzfolie | Novolen® 3200 M , s = 50 µm |
| | | |
| 4. | Laminierfolie | Lupolen® V 5510 SX, s = 50 µm |
| | Schutzfolie | Novolen® 1300 M , s = 50 µm |

### Karton-Muster:

- Ordnerrücken-Karton
- 2 Glanz-Kartonarten
- Grau-Karton

### II. Musteranfertigung

Auf die Karton-Muster wurden die Musterfolienstücke aus Lupolen® V 5510 SX mittels einer Andruckrolle blasenfrei aufgebracht.

Die Folien waren problemlos auf die Kartonoberflächen auftragbar und paßten sich aufgrund ihres geringen Rückstellvermögens leicht den Konturen an.

Die Folien wiesen nach dem Aufbringen jedoch noch keine ausreichende Haftung zu den Kartonoberflächen auf.

### III. Thermische Behandlung

Die Folien-/Kartonverbunde wurden nun in einen Wärmeofen gelegt und für 10 Minuten einer Wärmebehandlung bei 80°C unterzogen.

Anschließend wurden die Verbunde aus dem Ofen entnommen und konnten dann 10 Minuten bei Raumtemperatur abkühlen.

### IV. Ergebnisse

Alle Folienverbunde wiesen nach dem Abkühlvorgang ausreichend hohe Haftfestigkeitswerte zu den verschiedenen Karton-Mustern auf. Darüber hinaus erwiesen sich die Folienverbunde als wasser- und schmutzabweisend, bedruckbar und zeigten eine befriedigende Flexibilität und Lichtbeständigkeit.

## Patentansprüche

1. Verwendung eines Copolymerisats aus Ethylen und 13 bis 45 Gew.-%, bezogen auf das Copolymerisat, Vinylacetat als haftende Laminierfolie zum Beschichten von nichtmetallischen Trägermaterialien, wobei die haftende Schicht keine weiteren Copolymere aus der Gruppe Ethylenethylacrylat-Copolymer und Ethylen-Acrylsäure-Copolymere enthält.

2. Verwendung nach Anspruch 1, wobei auf der haftenden Laminierfolie noch mindestens eine weitere Schutzschicht aufgebracht ist.

3. Verwendung nach den Ansprüchen 1 oder 2, wobei die auf der haftenden Laminierfolie aufgebrachte weitere Schutzschicht aus thermoplastischen Polymeren besteht.

4. Verwendung nach den Ansprüchen 1 bis 3, wobei die auf der haftenden Laminierfolie aufgebrachte weitere Schutzschicht aus Polyolefinen besteht.

5. Verwendung nach den Ansprüchen 1 bis 4, wobei die haftende Laminierfolie zum Beschichten von Kartonagen eingesetzt wird.

## Claims

1. Use of a copolymer of ethylene and from 13 to 45% by weight, based on the copolymer, of vinyl acetate as an adhesive laminating film for coating nonmetallic substrates, wherein the adhesive layer comprises no further copolymers from the group consisting of ethylene-ethyl acrylate copolymers and ethylene-acrylic acid copolymers.

2. Use as claimed in claim 1, wherein at least one further protective layer has been applied to the adhesive laminating film.

3. Use as claimed in claim 1 or 2, wherein the further protective layer applied to the adhesive laminating film comprises a thermoplastic polymer.

4. Use as claimed in any of claims 1 to 3, wherein the further protective layer applied to the adhesive laminating film comprises a polyolefin.

5. Use as claimed in any of claims 1 to 4, wherein the adhesive laminating film is used for coating cardboard products.

## Revendications

1. Utilisation d'un copolymère d'éthylène et de 13 à 45% en poids, par rapport au copolymère, d'acétate de vinyle en tant que feuille laminée adhérente pour le revêtement de matières de support non métalliques, la couche adhérente ne comprenant aucun autre copolymère parmi le groupe constitué d'un copolymère éthylène-acrylate d'éthyle et de copolymères éthylène/acide acrylique.

2. Utilisation selon la revendication 1, dans laquelle on applique encore au moins une autre couche protectrice sur la feuille laminée adhérente.

3. Utilisation selon les revendications 1 ou 2, dans laquelle l'autre couche protectrice appliquée sur la feuille laminée adhérente est constituée de polymères thermoplastiques.

4. Utilisation selon les revendications 1 à 3, dans laquelle l'autre couche protectrice appliquée sur la feuille laminée adhérente est constituée de polyoléfines.

5. Utilisation selon les revendications 1 à 4, dans laquelle la feuille laminée adhérente est utilisée pour le revêtement de cartonnages.
